# EUROPÄISCHE PATENTSCHRIFT

(11) **EP 2 239 170 B1**
(45) Veröffentlichungstag und Bekanntmachung des Hinweises auf die Patenterteilung: **13.07.2016**
(21) Anmeldenummer: 10003688.8
(22) Anmeldetag: 03.04.2010
(51) Int. Cl.: B60R 25/02

(54) **Einrichtung zur Verhinderung des Lenkeinschlags an einem Fahrzeug (Rad-Einschlagsperre)**
Device for reducing the steer angle of a vehicle (wheel angle blocker)
Dispositif destiné à éviter l'angle de braquage sur un véhicule (élément de butée de roue)

(30) Priorität: 06.04.2009 DE 102009016582
(43) Veröffentlichungstag der Anmeldung: 13.10.2010
(73) Patentinhaber: Bohlscheid, Kurt, 01900 Großröhrsdorf (DE); Bohlscheid, Rita, 01900 Großröhrsdorf (DE)
(72) Erfinder: Bohlscheid, Kurt, 01900 Großröhrsdorf (DE); Bohlscheid, Rita, 01900 Großröhrsdorf (DE)
(74) Vertreter: Kaufmann, Sigfrid

(56) Entgegenhaltungen:
- GB-A- 2 352 433

## Beschreibung

Die Erfindung betrifft eine als Rad-Einschlagsperre ausgebildete Einrichtung zur Verhinderung des Lenkeinschlags an einem abgestellten Fahrzeug.

Die Erfindung ist anwendbar als Lenksperre für ein lenkbares und mehrrädriges Motorfahrzeug, bei dem üblicherweise zwei im vorderen Bereich des Fahrzeugs angeordnete Räder durch ein Lenkmimik über ein Lenkrad aus dem Innenraum des Fahrzeugs heraus lenkbar sind.

Die erfindungsgemäße Einrichtung ist geeignet, eine unbefugte Benutzung des Fahrzeugs durch Blockierung der Lenkbewegung zu verhindern.

Aus dem Stand der Technik sind verschiedene Arten von Lenksperren bekannt, bei denen durch im Bereich der Vorderräder des Fahrzeugs montierter oder zu befestigender Vorrichtungen ein Einschlagen der Vorderräder eines Kraftfahrzeugs verhindert wird.

Aus FR 626 632 C1 ist eine Vorrichtung zu entnehmen, bei der ein U-förmiger Bügel aus einer Ruhestellung heraus manuell um den Reifen eines gerade stehenden, nicht eingeschlagenen Rads herum geschoben wird, um das Lenken des Fahrzeuges zu verhindern. Die Schenkel des U-förmigen Bügels liegen an der Reifeninnenund der Reifenaußenflanke an. Mit Hilfe einer Arretiereinrichtung wird der Bügel sowohl in der eingefahrenen Stellung als auch in der ausgefahrenen Stellung fixiert.

In US 4 977 974 A ist eine Lenksperre beschrieben, bei der ein am Schweller des Fahrzeugs befestigter Sperrriegel manuell in Richtung Vorderrad gezogen wird. Um das Vorderrad mit dem Sperrriegel blockieren zu können, muss das Vorderrad zu einer Seite voll eingeschlagen sein. Mit Hilfe eines Schlosses wird der Sperrriegel arretiert. Beim Lösen der Arretierung wird der Sperrriegel durch eine Feder wieder Richtung Schweller zurückgezogen.

In EP 0 415 791 A1 und in der gattungsbildenden GB 2 352 433 A sind Lenksperren offenbart, bei der ein am Fahrzeugboden des Fahrzeugs montierter Sperrriegel mittels eines Elektromotors bzw. mittels eines Pneumatikzylinders Richtung Vorderrad bewegt wird. Bei eingeschlagenen Vorderrädern liegt der Sperrriegel an einer der Flanken des Reifens an und verhindert somit das Einschlagen der Vorderräder und folglich das Lenken des Fahrzeugs.

EP 1 826 075 A1 beschreibt eine Lenksperre, bei der ein massiver keilförmiger Körper auf zwei an der Fahrzeugkarosse montierte Bolzen geschoben und mittels eines Schlosses auf diesen fixiert wird. Für die Befestigung des keilförmigen Körpers ist es notwendig, dass das zu blockierende Rad eingeschlagen ist.

Lenksperren, die die Vorderräder direkt blockieren, sind allgemein massiv und schwerer zu "knacken", sie haben jedoch den Nachteil, dass sie für jedermann frei zugänglich sind und somit manipuliert und mit Werkzeug oder durch den Einsatz des eigenen Körpergewichts, indem sich eine Person beispielsweise auf den Sperrriegel stellt und wippt, dennoch zerstört und damit unwirksam gemacht werden können.

Der Erfindung liegt die Aufgabe zugrunde, eine Rad-Einschlagsperre zu schaffen, die in grundsätzlich bekannter Weise den Lenkeinschlag der an einem Fahrzeug angeordneten lenkbaren Räder und somit das Lenken und ein unbefugtes Wegfahren eines Fahrzeugs der eingangs genannten Art mit hoher Sicherheit dadurch verhindert, dass sie im Gegensatz zum Stand der Technik für Personen außerhalb des Fahrzeug nicht zugänglich und damit von außen nicht zerstörbar ist.

Die Aufgabe wird gemäß der Erfindung mit den Merkmalen nach dem Patentanspruch 1 gelöst. Vorteilhafte Ausgestaltungen und Weiterbildungen der Erfindung sind in den Patentansprüchen 2 bis 13 beschrieben.

Die Erfindung betrifft eine Einrichtung zur Verhinderung des Lenkeinschlags an einem Fahrzeug (Rad-Einschlagsperre), mit einem im Bereich der lenkbaren Räder bewegbar angeordneten, stabförmigen Sperrriegel, der aus einer Ruhestellung in eine Sperrstellung und aus der Sperrstellung heraus wieder in die Ruhestellung bewegbar ist. Die Rad-Einschlagsperre ist dadurch charakterisiert, dass der Sperrriegel vollständig medial (innerhalb zur Mitte) des Fahrzeuges liegt und sich der Sperrriegel in der Sperrstellung proximal (nahe gelegen) oder tangierend (berührend) an einem Abschnitt der Reifen-Innenflanke des lenkbaren Rades befindet, wobei er in dieser Sperrstellung an seinen beiden Enden am Fahrzeug arretiert ist.

Befindet sich der Sperrriegel in der Ruhestellung, so lassen sich die Räder des Fahrzeuges einschlagen und das Fahrzeug kann frei gelenkt werden. Ist der Sperrriegel in die Sperrstellung bewegt worden, so befindet sich dieser unmittelbar neben der Innenflanke des lenkbaren Rades oder berührt diese; damit wird das Einschlagen der Räder verhindert.

Da der Sperrriegel so angeordnet ist, dass er innerhalb des Fahrzeugs liegt ist dieser von einer neben oder an dem Fahrzeug stehenden Person nicht erreichbar; er ist somit sicher vor Manipulation und/oder Zerstörung geschützt.

Gemäß einer ersten Ausgestaltung der Erfindung ist der stabförmige Sperrriegel an einem Ende schwenkbar gelagert. In der Ruhestellung ist der Sperrriegel hochgeschwenkt, sodass sich das Rad frei einschlagen lässt. In der Sperrstellung ist der Sperrriegel heruntergeschwenkt und mit seinem freien Ende an einem Fixpunkt arretiert.

Dadurch, dass der Sperrriegel in der Sperrstellung an beiden Enden fest arretiert ist, ist es entgegen den aus dem Stand der Technik bekannten Rad-Einschlagsperren nicht möglich, den Sperrriegel als Hebelarm zu verwenden, mit dem das Lager des Sperrriegels oder der Sperrriegel selbst durch Wegdrücken oder Verbiegen zerstört werden kann.

In einer anderen Ausgestaltung der Erfindung ist vorgesehen, den Sperrriegel auf zwei zueinander parallelen Führungselementen longitudinal zu führen. Es wird damit eine vertikale Verschiebung des gesamten Sperrriegels ermöglicht.

Wie auch schon bei der zuvor beschriebenen Variante wird das Einschlagen der Räder ermöglicht, wenn sich der Sperrriegel in der Ruhestellung (oben) befindet und das Lenken des Fahrzeuges verhindert, wenn der Sperrriegel in der Sperrstellung (unten) ist.

Auch hier verhindert die beidseitige Arretierung des Sperrriegels eine aktive Zerstörung desselbigen.

Bei einer anderen Ausführung der Erfindung ist vorgesehen, dass im Fahrzeug wenigstens ein Sperrriegel quer zur Fahrrichtung eingebaut ist, der aus seiner Ruhelage durch eine transversale Verschiebung an die Reifen-Innenflanke des lenkbaren Rades heranführbar ist.

Bei dieser Ausführung ist es vorteilhaft, zwei Sperrriegel zu verwenden, die entweder beide sagittal (nach vorne und hinten) versetzt gegen die Reifen-Innenflanke eines Rades drücken oder transversal versetzt jeweils gegen die Reifen-Innenflanke des linken und rechten Rades drücken.

Besonders vorteilhaft ist hierbei, dass die Räder vor dem Ausfahren der Sperrriegel nicht in die Geradeausstellung gebracht werden müssen.

Bei einer weiteren Ausgestaltung der Erfindung ist vorgesehen, dass der Sperrriegel in seiner Längsachse sagittal verschiebbar gelagert ist und in der Sperrstellung die Endabschnitte des Sperrriegels mit den schon beschriebenen Vorteilen am Fahrzeug fixiert sind.

Weiterhin ist vorgesehen, dass die Sperrriegel mit einer Sicherungseinrichtung blockiert sind; dies können sowohl mechanische als auch elektrisch bedienbare Schließeinrichtungen, die mittels Schlüssel mit entsprechendem Schließzylinder oder mit einem Stellmotor und codierbarer Bedieneinrichtung im Fahrzeuginnenraum eingelegt werden, sein, um zusätzlich ein unerlaubtes Lösen der Sperre zu verhindern.

Die Bewegung der jeweiligen Sperrriegel erfolgt mittels Bowdenzug und einer entsprechenden Gelenkhebelanordnung, mit elektrischen Stellmotoren oder mit hydraulischen Mitteln; diese werden entweder manuell oder elektrisch bedient bzw. angesteuert.

Mit der Bedieneinrichtung im Fahrzeuginnenraum lässt sich die Rad-Einschlagsperre bequem vom Innenraum des Fahrzeuges aus bedienen und sichern. Besonders vorteilhaft ist es, wenn sich die Rad-Einschlagsperre nur nach Eingabe eines Zahlen und/oder Buchstabencodes in die Bedieneinrichtung einlegen bzw. lösen lässt.

Die Erfindung wird nachstehend anhand von vier Ausführungsbeispielen und der Figuren 1 bis 5 näher erläutert; hierbei zeigen:
- Fig. 1: eine vereinfacht schematische Darstellung eines Fahrwerks eines Motorfahrzeugs mit lenkbaren Vorderrädern und einer an einem der Räder angeordneten Einrichtung gemäß der Erfindung;
- Fig. 2: eine Seitenansicht auf das Rad gemäß der Fig. 1 mit einem schwenk/kippbaren Sperrriegel;
- Fig. 3: eine schematische Darstellung eines gegenüber einem lenkbaren Rad vertikal verschiebbaren Sperrriegels;
- Fig. 4: eine schematische Darstellung mit zwei gegenüber einem lenkbaren Rad radial verschiebbaren Sperrmitteln und
- Fig. 5: eine Darstellung analog der Fig. 4 mit einem längs zu einem lenkbaren Rad in einer Führung verschiebbar angeordneten Sperrriegel.

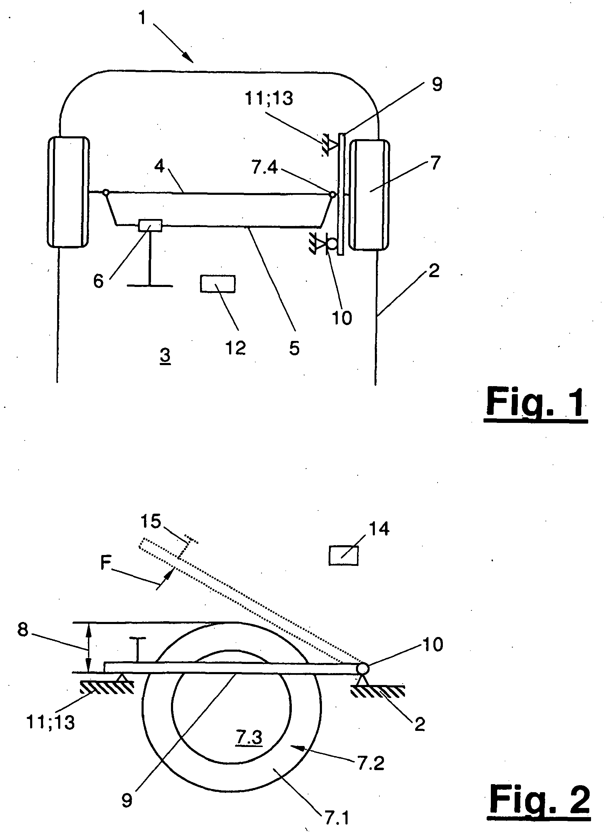

In der Fig. 1 ist ein stark vereinfachtes Fahrzeug mit einem nicht näher dargestellten Fahrgestell mit der Position 1 gekennzeichnet.

Das Fahrzeug 1 stellt beispielsweise ein Personenkraftfährzeug dar, das eine nicht näher beschriebene Karosserie 2 mit einem Innenraum 3 aufweist.

An einer in einer angenommenen Fahrtrichtung vorn liegenden, hier beispielsweise starren vorderen Achse 4 ist eine Spurstange 5 angeordnet, die über ein Lenkgetriebe 6 mit dem an der Achse 4 entsprechend angeordneten Rädern 7 verbunden sind, welche mit der Spurstange 5 über das Lenkgetriebe 6 bei normalem Betrieb gegenüber der Fahrtrichtung jeweils um einen Betrag nach links und rechts verschwenkbar sind beziehungsweise in Geradeausstellung gehalten werden.

Wie aus der Figur 1 unter Bezugnahme auf die Figur 2 erkennbar ist, ist weist das Rad 7 einen Reifen 7.1, einer Reifen-Innenflanke 7.2 eine Felge 7.3 und eine Radaufhängung 7.4 auf, die in entsprechender Ausführung an der Achse 4 mit dem Rad 7 für dessen Drehung und Lenkbarkeit verbunden ist.

An der Reifen-Innenflanke 7.2 des Rades 7 ist gemäß dem Ausführungsbeispiel ein nicht näher beschriebener Abschnitt 8 vorgesehen.

Wie in den Figuren 1 und 2 dargestellt wurde, ist dieser Abschnitt vorzugsweise oberhalb der Achsanordnung bzw. Radaufhängung 7.4 des lenkbaren Rades 7 vorgesehen.

In diesen Abschnitt 8 oder einen Bereich des Abschnitts 8 greift ein Sperrriegel 9 ein, der gemäß diesem Ausführungsbeispiel stabförmig ausgebildet und einseitig in einer Lagerung 10 gelagert ist, die mit dem Rahmen bzw. der Karosserie 2 des Fahrzeugs 1 fest verbunden, beispielsweise verschweißt, ist.

Der in der Figur 2 dargestellte freie Teil des Sperrriegels 9 liegt in seiner hier etwa waagerecht dargestellten Position nach dem Innenraum 3 hin in einem möglichst geringen Abstand parallel neben dem Rad 7 (Fig. 1).

In Verbindung mit einem weiteren Fixpunkt 11 an der Karosserie 2 oder an einem geeigneten anderen Teil des Fahrzeugs 1 ist der freie Teil des Sperrriegels 9 in dieser Lage arretierbar, sodass das Rad 7 in seinem Schwenkbereich gehindert bzw. die Lenkung blockiert wird.

Mit Hilfe einer Bedienungseinheit 12 (Fig. 1) ist der freie Teil des Sperrriegels 9 aus einer mit der Arretierung 11 verbundenen Sicherungseinrichtung 13 beispielsweise mittels eines Stellmotors 14 mit einer Kraft F entsperrbar, wobei der Stellmotor 14 gemäß dieser Ausführung mit einem am freien Teil des Sperrriegels 9 angeordneten Bedienmittel 15, beispielsweise über einen Bowdenzug, eine Hebelanordnung oder dergleichen, verbunden ist.

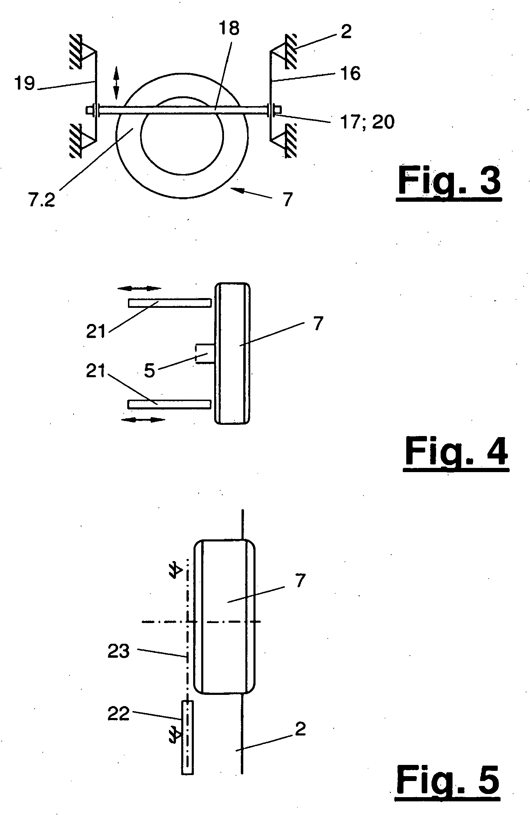

In der Figur 3 ist eine Ausführungsform schematisch vereinfacht dargestellt, bei der im Bereich des Rades 7 analog der vorher beschriebenen Ausführungen beispielsweise zwei Führungsstangen 16 vorgesehen sind, an denen in vorzugsweise oberhalb der Spurstange 5 (Fig. 1) angeordneten Führungen 17 ein etwa stabförmiger Sperrriegel 18 verschiebbar gelagert ist.

Die Führungsstangen 16 sind hierbei parallel zueinender beabstandet an der Karosserie bzw. dem Rahmen 2 des Fahrzeugs 1 beispielsweise annähernd vertikal so angeordnet, dass der Sperrriegel 18 etwa parallel zu der Reifen-Innenflanke 7.2 in beiden Richtungen verschiebbar ist von einer Position außerhalb des Rades 7 in eine Position, die etwa dem Bereich des Abschnitts 8 (Fig. 2) entspricht und umgekehrt.

Der Sperrriegel 18 gemäß dieser Ausführungsform kann beispielsweise ohne Gegenkraft oder gegen eine Feder 19 mittels eines Stellmotors 20 oder einem anderen geeigneten Antriebsmittel in beiden Richtungen verschoben werden, sodass das Rad 7 einerseits frei bewegbar und lenkbar und andererseits in seinem Lenk- bzw. Schwenkbereich entsprechend eingestellten Abständen und Größen des Sperrriegels 18 blockiert ist.

Der Sperrriegel 18 gemäß dieser Ausführung kann auch in etwa horizontaler Anordnung auf das jeweilige Rad 7 wirken, wobei die Führungsstangen 16 in entsprechender Lage einseitig und/oder beidseitig am Fahrzeug 1 in entsprechender Lage oberhalb der Spurstange 5 angeordnet sind.

In der Figur 4 sind in ebenfalls stark vereinfachter Form stabförmige Sperrmittel 21 dargestellt, die hier als ein Paar vom Innenraum 3 her gegen das Rad 7 bzw. die Felge 7.3 in geeigneter Weise verschiebbar angeordnet und in ihrer Endlage am Rad 7 sicherbar sind.

Die Sperrmittel 21 können in die Felge 7.3 eingreifen (nicht dargestellt) wozu beispielsweise gebogene Endbereiche an den Sperrmitteln 21 vorgesehen sind, die in entsprechend an den Felgen 7.3 vorgesehenen Öffnungen eingreifen und so deren Lenkbewegung verhindern.

Bei einer entsprechenden Anordnung analog dieser Ausführung an beiden lenkbaren Rädern 7, jedoch mit jeweils nur einem Sperrmittel 21, ist ebenfalls eine wirksame Blockade der Lenkung möglich.

In der Figur 5 ist eine weitere Ausführungsform gemäß der Erfindung stark vereinfacht dargestellt.

Hierbei ist nach dem Innenraum 3 hin einseitig oder an beiden lenkbaren Rädern 7 jeweils eine Führung 22 beispielsweise an einer Position innerhalb der Karosserie 2 im Bereich der lenkbaren Räder 7 angeordnet, in der jeweils ein stabförmiger Sperrriegel 23 mit Hilfe geeigneter Antriebe derart verschiebbar gelagert ist, dass einerseits der Sperrriegel 23 an der Reifen-Innenflanke 7.2 (Fig. 2) des jeweiligen Rades 7 gesichert eingreift und seine Lenkung sperrt und andererseits im Fahrbetrieb der Sperrriegel 23 in die Führung 22 zurückgeführt und gesichert wird.

Die gemäß der Erfindung eingesetzten Sperrriegel bzw. Sperrmittel sind stabil und bruchfest ausgebildet, und sie bestehen vorzugsweise aus einem harten, korrosionsgeschützten Eisenwerkstoff.

### Liste der verwendeten Bezugszeichen

- 1: Fahrzeug
- 2: Karosserie, Rahmen
- 3: Innenraum
- 4: Achse (starr oder Einzelradaufhängung)
- 5: Spurstange
- 6: Len kgetriebe
- 7: Rad (lenkbar)
- 7.1: Reifen
- 7.2: Reifen-Innenflanke
- 7.3: Felge
- 7.4: Radaufhängung
- 8: Abschnitt
- 9: Sperrriegel
- 10: Lagerung
- 11: Arretierung, Fixpunkt
- 12: Bedienungseinheit
- 13: Sicherungseinrichtung
- 14: Stellmotor
- 15: Bedienmittel
- 16: Führungsstange
- 17: Führung
- 18: Sperrriegel
- 19: Feder
- 20: Stellmotor
- 21: Sperrriegel
- 22: Führung
- 23: Sperrriegel

- F: Kraft

## Patentansprüche

1. Einrichtung zur Verhinderung des Lenkeinschlags an einem Fahrzeug, mit einem im Bereich von lenkbaren Rädern (7) bewegbar angeordneten, stabförmigen Sperrriegel (9; 18; 23), der aus einer Ruhestellung in eine Sperrstellung und aus der Sperrstellung heraus wieder in die Ruhestellung bewegbar ist, wobei der Sperrriegel vollständig innerhalb des Fahrzeuges zur Mitte des Fahrzeuges hin liegt und der Sperrriegel sich in der Sperrstellung derart nahe oder berührend an einem Abschnitt (8) der Reifen-Innenflanke (7.2) eines der lenkbaren Räder (7) befindet, dass das Einschlagen des Rades verhindert ist, **dadurch gekennzeichnet, dass** der stabförmige Sperrriegel in der Sperrstellung an seinen beiden Enden am Fahrzeug (1) arretiert ist.

2. Einrichtung nach Anspruch 1, **dadurch gekennzeichnet, dass** der Sperrriegel (9) einseitig schwenkbar gelagert ist und mit seinem freien Endabschnitt in der Sperrstellung an einem Fixpunkt (11) am Fahrzeug (1) arretiert ist.

3. Einrichtung nach Anspruch 1, **dadurch gekennzeichnet, dass** der Sperrriegel (18) auf Führungselementen (16; 17) vertikal verschiebbar ist.

4. Einrichtung nach Anspruch 1, **dadurch gekennzeichnet, dass** der Sperrriegel (23) in seiner Längsachse nach vorn und hinten verschiebbar gelagert ist und in der Sperrstellung die Endabschnitte des Sperrriegels am Fahrzeug (1) fixiert sind.

5. Einrichtung nach einem der Ansprüche 1 bis 4, **dadurch gekennzeichnet, dass** der Sperrriegel (9; 17) mit einer Sicherungseinrichtung (13) gesichert ist.

6. Einrichtung nach Anspruch 4, **dadurch gekennzeichnet, dass** die Sicherungseinrichtung (13) als Schließeinrichtung ausgebildet ist.

7. Einrichtung nach Anspruch 6, **dadurch gekennzeichnet, dass** die Schließeinrichtung mit einer im Innenraum (3) des Fahrzeugs (1) angeordneten Bedienungseinheit (12) verbunden ist.

8. Einrichtung nach einem der Ansprüche 6 und 7, **dadurch gekennzeichnet, dass** die Schließeinrichtung mit einem Stellmotor (14) verbunden ist.

9. Einrichtung nach Anspruch 8, **dadurch gekennzeichnet, dass** der Stellmotor (14) über ein codierbares System fernbedienbar ist.

10. Einrichtung nach einem der Ansprüche 1 bis 9, **dadurch gekennzeichnet, dass** der Sperrriegel (9) gegen eine Kraft einer Feder (19) in Richtung des Abschnitts (8) an die Reifen-Innenflanke (7.2) heran bewegbar ist.

11. Einrichtung nach einem der Ansprüche 1 bis 10, **dadurch gekennzeichnet, dass** der Sperrriegel (9; 18; 23) über einen Bowdenzug vom Innenraum (3) des Fahrzeugs aus bedienbar ist.

12. Einrichtung nach einem der Ansprüche 1 bis 10, **dadurch gekennzeichnet, dass** der Sperrriegel (9; 18; 23) mit Hilfe eines Stellmotors (20) bewegbar und der Stellmotor (20) vom Innenraum (3) des Fahrzeugs (1) aus bedienbar ist.

13. Einrichtung nach einem der Ansprüche 1 bis 11, **dadurch gekennzeichnet, dass** der Sperrriegel (9; 18; 23) mit einem hydraulischen Antrieb bewegbar und der hydraulische Antrieb vom Innenraum (3) des Fahrzeugs (1) aus bedienbar ist.

## Claims

1. A device to prevent the steering in a vehicle from being turned, with a rod-shaped locking bolt (9; 18; 23) that is movably arranged in the area of steerable wheels (7) so that it can be moved out of a rest position into a locked position and out of the locked position back into the rest position, the locking bolt lying completely within the vehicle in the direction toward the middle of the vehicle, and being located, when in the locked position, near or touching a section (8) of the tire's inner sidewall (7.2) of one of the steerable wheels (7) so as to prevent the turning of the wheel, **characterized in that** when the rod-shaped locking bolt is in the locked position it is locked to the vehicle (1) at both its ends.

2. The device described in claim 1, **characterized in that** the locking bolt (9) is pivotably mounted on one side and, when it is in the locked position, its free end section is locked to a fixed point (11) on the vehicle (1).

3. The device described in claim 1, **characterized in that** the locking bolt (18) can be vertically moved on guide elements (16; 17).

4. The device described in claim 1, **characterized in that** the locking bolt (23) is mounted so that it can be moved forward and backward in the direction of its longitudinal axis, and when in the locked position the end sections of the locking bolt are fixed to the vehicle (1).

5. The device described in one of claims 1 through 4, **characterized in that** the locking bolt (9; 17) is secured with a safeguard device (13).

6. The device described in claim 4, **characterized in that** the safeguard device (13) is in the form of a closing device.

7. The device described in claim 6, **characterized in that** the closing device is connected with a control unit (12) that is arranged in the interior (3) of the vehicle (1).

8. The device described in one of claims 6 and 7, **characterized in that** the closing unit is connected with an actuator motor (14).

9. The device described in claim 8, **characterized in that** the actuator motor (14) can be remotely controlled through an encodable system.

10. The device described in one of claims 1 through 9, **characterized in that** the locking bolt (9) can be moved against the force of a spring (19) in the direction of the section (8) on the tire's inner sidewall (7.2).

11. The device described in one of claims 1 through 10, **characterized in that** the locking bolt (9; 18; 23) can be operated from the interior (3) of the vehicle through a Bowden cable.

12. The device described in one of claims 1 through 10, **characterized in that** the locking bolt (9; 18; 23) can be moved using an actuator motor (20), and the actuator motor (20) can be operated from the interior (3) of the vehicle (1).

13. The device described in one of claims 1 through 11, **characterized in that** the locking bolt (9; 18; 23) can be moved using a hydraulic drive, and the hydraulic drive can be operated from the interior (3) of the vehicle (1).

## Revendications

1. Dispositif pour éviter le braquage sur un véhicule, avec un organe de blocage (9, 18, 23) en forme de tige, disposé mobile dans la région des roues (7) motrices, qui peut se déplacer d'une position de repos dans une position de verrouillage et de la position de verrouillage de nouveau vers la position de repos, où l'organe de blocage se situe totalement à l'intérieur du véhicule vers le milieu du véhicule et l'organe de blocage se trouve proche ou en contact avec une partie (8) du flanc intérieur de pneu (7.2) de l'une des roues (7) motrices de sorte que le braquage de la roue est empêché, **caractérisé en ce que** l'organe de blocage en forme de tige est en butée dans le position de verrouillage sur ses deux extrémités sur le véhicule (1).

2. Dispositif selon la revendication 1, **caractérisé en ce que** l'organe de blocage (9) est logé en pouvant pivoter sur un côté et est en butée sur un point fixe (11) sur le véhicule (1) dans la position de verrouillage avec sa partie d'extrémité libre.

3. Dispositif selon la revendication 1, **caractérisé en ce que** l'organe de blocage (18) peut être coulissé verticalement sur des éléments de guidage (16; 17).

4. Dispositif selon la revendication 1, **caractérisé en ce que** l'organe de blocage (23) est logé en pouvant coulisser vers l'avant ou l'arrière sur son axe longitudinal et les parties d'extrémité de l'organe de blocage sont fixées sur le véhicule (1) dans la position de verrouillage.

5. Dispositif selon l'une des revendications 1 à 4, **caractérisé en ce que** l'organe de blocage (9; 17) est protégé avec un dispositif de sécurité (13).

6. Dispositif selon la revendication 4, **caractérisé en ce que** le dispositif de sécurité (13) est conçu sous la forme d'un dispositif de fermeture.

7. Dispositif selon la revendication 6, **caractérisé en ce que** le dispositif de fermeture est relié avec une unité d'actionnement (12) disposée dans l'habitacle (3) du véhicule (3).

8. Dispositif selon l'une des revendications 6 et 7, **caractérisé en ce que** le dispositif de fermeture est relié avec un servomoteur (14).

9. Dispositif selon la revendication 8, **caractérisé en ce que** le servomoteur (14) peut être actionné à distance par l'intermédiaire d'un système digicode.

10. Dispositif selon l'une des revendications 1 à 9, **caractérisé en ce que** l'organe de blocage (9) peut être déplacé contre une force de ressort (19) en direction de la partie (8) sur le flanc intérieur de pneu (7.2).

11. Dispositif selon l'une des revendications 1 à 10, **caractérisé en ce que** l'organe de blocage (9; 18; 23) peut être actionné par l'intermédiaire d'un câble sous gaine à partir de l'habitacle (3) du véhicule.

12. Dispositif selon l'une des revendications 1 à 10, **caractérisé en ce que** l'organe de blocage (9; 18; 23) peut être déplacé à l'aide d'un servomoteur (20) et le servomoteur (20) peut être actionné à partir de l'habitacle (3) du véhicule (1).

13. Dispositif selon l'une des revendications 1 à 11, **caractérisé en ce que** l'organe de blocage (9; 18; 23) peut être déplacé avec un entraînement hydraulique et l'entraînement hydraulique peut être actionné à partir de l'habitacle (3) du véhicule (1).
